Europäisches Patentamt

European Patent Office

Office européen des brevets

(19)

(11) **EP 1 438 204 B1**

(12) **FASCICULE DE BREVET EUROPEEN**

(45) Date de publication et mention
de la délivrance du brevet:
**27.07.2005 Bulletin 2005/30**

(21) Numéro de dépôt: **02781252.8**

(22) Date de dépôt: **15.10.2002**

(51) Int Cl.⁷: **B60C 23/20**

(86) Numéro de dépôt international:
**PCT/EP2002/011502**

(87) Numéro de publication internationale:
**WO 2003/035414 (01.05.2003 Gazette 2003/18)**

(54) **PROCEDE D'ESTIMATION DE LA TEMPERATURE DE L'AIR DE LA CAVITE INTERNE D'UN PNEUMATIQUE ET APPLICATION A LA DETECTION D'UN FONCTIONNEMENT ANORMAL D'UN SYSTEME DE ROULAGE A PLAT**

VERFAHREN ZUR SCHÄTZUNG VON DER LUFTTEMPERATUR IM INNENRAUMS EINES REIFENS UND ANWENDUNG ZUM ERFASSEN VON ANORMALITÄTEN IM NOTLAUFBETRIEB.

METHOD FOR ESTIMATING AIR TEMPERATURE OF A TYRE INTERNAL CAVITY AND USE FOR DETECTING ABNORMAL OPERATING CONDITION OF A FLAT RUNNING SYSTEM

(84) Etats contractants désignés:
**AT BE BG CH CY CZ DE DK EE ES FI FR GB GR IE IT LI LU MC NL PT SE SK TR**

(30) Priorité: **18.10.2001 FR 0113624**

(43) Date de publication de la demande:
**21.07.2004 Bulletin 2004/30**

(60) Demande divisionnaire:
**04016073.1 / 1 464 519**

(73) Titulaires:
• **Société de Technologie Michelin
63000 Clermont-Ferrand Cedex 09 (FR)**
• **Michelin Recherche et Technique S.A.
1763 Granges-Paccot (CH)**

(72) Inventeurs:
• **SHEPHERD, Russell
F-63100 Clermont-Ferrand (FR)**
• **ABINAL, Richard
F-63960 Veyre-Monton (FR)**
• **BERGER, Eric
F-63410 Loubeyrat (FR)**

(74) Mandataire: **Dequire, Philippe
M.F.P. Michelin,
SGD/LG/PI-F35-Ladoux
63040 Clermont-Ferrand Cedex 09 (FR)**

(56) Documents cités:
**WO-A-01/17806          US-A1- 2001 022 551**

## Description

L'invention a pour objet un procédé d'estimation de la température de l'air de la cavité interne d'un pneumatique en roulage ainsi que l'application de ce procédé à la détection d'un fonctionnement anormal d'un pneumatique et d'un système de roulage à plat.

On sait que la température est un paramètre important pour le fonctionnement des objets caoutchouteux en raison des variations notables des propriétés physiques et mécaniques de ces objets en fonction de cette température. En ce qui concerne les pneumatiques, la température de l'air de la cavité interne définie par la roue et le pneumatique est un indicateur important des conditions de fonctionnement du pneumatique. Il est de plus pas toujours très facile de mesurer cette température en roulage et un besoin existe de pouvoir l'estimer de façon fiable.

L'invention a pour objet un procédé d'estimation de la température de l'air de la cavité interne d'un pneumatique dans lequel :

- préalablement au fonctionnement courant, on réalise une série d'essais de roulage du pneumatique pourvu d'un moyen de mesure de la température de l'air de la cavité à vitesses $V$ et températures extérieures $T_{amb}$ données, le pneumatique supportant une charge donnée et la cavité étant à une pression relative interne donnée et on ajuste une fonction donnant la température de l'air interne $T_{ai}$ interne en fonction des paramètres vitess et température extérieure :

$$T_{ai} = F(V, T_{amb}) \; ;$$

- en fonctionnement courant, le pneumatique équipant un véhicule dans les conditions précédentes de charge et de pression relative dans la cavité, on estime la température de l'air interne de la cavité en fonction de la vitesse du véhicule et de la température extérieure au véhicule.

A titre d'exemple préférentiel, la température interne $T_{ai}$ peut être donnée par :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$, température interne estimée à l'instant $t_n$ ; $T_{ai,n-1}$, température interne estimée à l'instant $t_{n-1}$ ; $T_{ss}$, température interne à l'équilibre thermique dans les conditions d'essais données ; $\tau$, coefficient d'ajustement ; et

$$T_{SS} = (a + bT_{amb})V^{(c + T_{amb}d)} + T_{amb}$$

où $a, b, c$ et $d$ sont des coefficients d'ajustement.

Il est avantageux de réaliser les essais de roulage dans des conditions telles que la pression relative dans la cavité correspond, à froid, à la pression relative d'usage du pneumatique.

Une telle estimation pourrait notamment être utile dans le cas du fonctionnement de systèmes de roulage à plat. Dans ce cas, il est avantageux de réaliser les essais de roulage dans des conditions de roulage à plat, c'est-à-dire avec une pression relative dans la cavité du pneumatique substantiellement nulle.

Le procédé d'estimation de la température de l'air de la cavité interne d'un pneumatique en roulage précédent peut avoir de nombreuses applications. Parmi celles-ci, la détection d'un fonctionnement anormal d'un pneumatique en conditions de roulage, usuelles où de roulage à plat, est particulièrement intéressante.

On sait que la baisse de pression relative d'un pneumatique peut être brutale, par exemple à la suite d'un éclatement, ou très lente, par exemple après une crevaison, mais dans tous les cas il y a un risque d'accident par perte de contrôle de la direction du véhicule. On a donc imaginé des dispositifs dits « de roulage à plat » qui comprennent généralement un appui de sécurité annulaire monté à l'intérieur du pneumatique pour limiter l'affaissement de ce dernier et éventuellement pour éviter le phénomène du décoincement, c'est-à-dire le déplacement d'un bourrelet du pneumatique vers l'intérieur de la jante, ce qui provoque le déjantage du pneumatique.

Un tel dispositif est décrit, par exemple, dans les brevets W0 94/13498 et EP 0 796 747 (Michelin et Cie).

On a aussi imaginé des pneumatiques dont la structure, notamment des flancs, est fortement renforcée pour leur permettre de rouler à faible pression relative ou à pression relative nulle. Un exemple de tels pneumatiques dits « autoporteurs » est donné dans le brevet US 6,026,878.

Paradoxalement, ces dispositifs modernes de roulage à plat sont si efficaces que le conducteur ne s'aperçoit pas aisément de la baisse de la pression relative de l'un des pneumatiques de son véhicule. Ces systèmes doivent donc comporter des appareils de mesure de la pression relative des pneumatiques dont la fonction essentielle est d'avertir le conducteur dès que la pression relative dans un pneumatique descend en dessous d'un seuil prédéterminé.

Ces systèmes de roulage à plat, basés sur l'utilisation de moyens de support de la bande de roulement du pneumatique en cas de dégonflement de l'enveloppe disposés dans ou en dehors du pneumatique autorisent actuellement, selon les manufacturiers de pneumatiques, un roulage dans des conditions de roulage à plat à vitesse limitée (de l'ordre de 80 km/h au maximum) et pour une distance elle aussi limitée (de l'ordre de 200 km).

Ces valeurs d'autonomie sont des valeurs déterminées dans des conditions très sévères pour garantir la sécurité des utilisateurs lors d'un roulage à plat. Il peut cependant être utile de compléter ces valeurs moyennes en informant le conducteur d'un véhicule d'un fonctionnement anormal d'un système de roulage à plat.

L'invention a pour objet un procédé de détection d'un fonctionnement anormal d'un système de roulage à plat équipant un véhicule, le système comprenant pour chaque roue un pneumatique formant avec la roue une cavité, un moyen de détection de la température interne de la cavité, un moyen d'estimation de cette température interne de la cavité et des moyens pour générer et transmettre une alarme. Ce procédé est tel que, en fonctionnement courant:

- on mesure périodiquement la température interne $T_n$ dans la cavité ;
- on estime périodiquement la température interne $T_{ai}$ ;
- on compare la température mesurée et la température estimée ; et
- on déclenche une alarme lorsque le résultat de cette comparaison est supérieur à un seuil donné.

Selon un mode de réalisation simple, on estime la température interne en fonction de la vitesse V du véhicule et de la température extérieure $T_{amb}$ au véhicule :

$$T_{ai} = F(V, T_{amb})$$

De préférence, on détermine la fonction $F$ à partir d'une série d'essais de roulage à plat du pneumatique à vitesses V et températures extérieures $T_{amb}$ données, le pneumatique supportant une charge égale à sa charge maximale d'usage et la cavité étant substantiellement à pression relative nulle.

Cette série d'essais a donc lieu dans les conditions les plus sévères prévues pour le pneumatique en ce qui concerne la charge et la pression relative à l'intérieur de la cavité du pneumatique. Pour cela, on peut par exemple retirer la valve de gonflage.

Un exemple de fonction $F$ peut être :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$, température interne estimée à l'instant $t_n$ ; $T_{ai,n-1}$, température interne estimée à l'instant $t_{n-1}$ ; $T_{ss}$, température interne à l'équilibre thermique dans les conditions d'essais données ; $\tau$, coefficient d'ajustement ; et

$$T_{SS} = (a + bT_{amb})V^{(c + T_{amb}d)} + T_{amb}$$

où $a$, $b$, $c$ et $d$ sont des coefficients d'ajustement.

L'estimation de la température interne peut utiliser en complément la valeur de la charge $Q$ supportée par le pneumatique. Les essais de détermination de la fonction $F$ correspondante incluent alors comme paramètre complémentaire des essais cette charge $Q$. Cela permet d'améliorer sensiblement la précision de l'estimation de la température de l'air interne dans la cavité du pneumatique.

On peut aussi utiliser en complément la valeur de la pression relative de gonflage $P$ du pneumatique. Les essais de détermination de la fonction $F$ incluent alors aussi ce paramètre $P$.

Selon le procédé selon l'invention, on peut déclencher une alarme dès que la température mesurée $T_n$ dépasse la température estimée $T_{ai}$ d'un seuil donné. Ce seuil peut être de l'ordre de 10 degrés Celsius.

Le procédé selon l'invention permet d'avertir le conducteur lorsque le système de roulage à plat utilisé ne fonctionne pas dans les conditions prévues par le manufacturier de pneumatiques. Ceci peut par exemple se passer lorsque le véhicule est très surchargé, ou lorsque, pour une raison quelconque, la quantité de produit de lubrification présent dans la cavité pour faciliter le roulage à plat n'est pas correcte, ou lorsque, à la suite d'une réparation par exemple, la surface intérieure du pneumatique a ses propriétés modifiées par un badigeon de réparation...

Ce procédé permet aussi d'avertir le conducteur en fin de la durée de vie normale du système de roulage à plat. Dans ces conditions, en fin de durée de vie, on observe souvent un échauffement marqué de la température de l'air interne dans la cavité. Cet échauffement devient significatif et peut être interprété sans ambiguïté par le suivi des températures mesurées et estimées. Le fait que la température mesurée dépasse sensiblement la température estimée, dans des conditions de roulage stables, peut être interprété comme une dégradation du fonctionnement du système de roulage à plat, information qu'il faut alors transmettre sans délai au conducteur du véhicule.

De préférence, le système comprend en plus un avertisseur de dégonflement de la cavité et on déclenche le procédé de détection d'un fonctionnement anormal selon l'invention à partir du moment où cet avertisseur a détecté un seuil de dégonflement prédéterminé.

Le pneumatique est de préférence pourvu de moyens de renforcement structurel. Ceux-ci peuvent être un appui de sécurité disposé radialement extérieurement relativement à la jante de la roue et destiné à supporter la bande de roulement du pneumatique en cas de perte de pression relative de gonflage.

Ils peuvent aussi être insérés dans la structure du pneumatique.

L'invention a aussi pour objet un dispositif de détection d'un fonctionnement anormal d'un système de roulage à plat destiné à équiper un véhicule, le système comprenant pour chaque roue un pneumatique formant avec ladite roue une cavité et comportant :

- - un moyen de mesure de la température interne dans la cavité,
- un moyen d'estimation de la température interne,
- un moyen de comparaison entre la température interne mesurée et la température interne estimée, et
- des moyens pour générer et transmettre une alarme au conducteur.

Ce dispositif est adapté pour, en fonctionnement courant, générer une alarme lorsque le résultat de ladite comparaison satisfait une relation donnée.

L'invention a aussi pour objet un procédé similaire appliqué à un pneumatique destiné à équiper un véhicule. Dans cette application, comme précédemment, on peut estimer la température interne en fonction de la vitesse du véhicule et de la température extérieure au véhicule.

De même, préalablement au fonctionnement courant, on détermine la fonction $F$ à partir d'une série d'essais de roulage du pneumatique à vitesses $V$ et températures extérieures $T_{amb}$ données, le pneumatique supportant une charge correspondant à la charge maximale d'usage et la cavité étant, à froid, à une pression relative interne correspondant à la pression relative d'usage.

Ce procédé a ainsi l'avantage d'indiquer un fonctionnement anormal lié à un échauffement trop élevé de la cavité interne du pneumatique et les essais préalables sont bien faits aux pressions relatives de gonflage d'usage recommandées et non à des pressions proches des pressions relatives nulles.

Les procédés et dispositifs selon l'invention vont maintenant être décrits plus avant, en prenant comme exemple l'application à la détection d'un fonctionnement anormal d'un système de roulage à plat, à l'aide du dessin annexé dans lequel :

- la figure 1 est une vue de côté d'un appui de sécurité ;
- la figure 2 est une coupe axiale de l'appui de la figure 1 monté sur une jante de roue et en appui contre un pneumatique ;
- la figure 3 est une coupe AA tel qu'indiqué à la figure 1 d'un appui de sécurité ;
- la figure 4 présente l'implantation d'un dispositif avertisseur sur une roue ;
- la figure 5 présente un schéma d'implantation d'un dispositif selon l'invention dans un véhicule ;
- la figure 6 présente l'évolution de la température interne d'un système PAX lors d'un roulage à plat ;
- la figure 7 présente les évolutions de la température interne d'un système PAX lors d'essais analytiques dans différentes conditions ;
- la figure 8 présente une comparaison entre température interne mesurée et estimée lors d'un essai d'un système PAX en roulage à plat ;
- la figure 9 présente une comparaison entre les évolutions des températures internes mesurée et estimée lors d'un roulage analytique ;
- la figure 10 présente une comparaison entre les évolutions des températures internes mesurée et estimée lors d'un roulage analytique similaire à celui de la figure 4 avec une quantité de gel de lubrification inférieure ;
- la figure 11 est similaire à la figure 9 lors d'un roulage analytique avec une quantité de gel de lubrification encore inférieure ; et

- la figure 12 présente un diagramme simplifié d'un exemple du procédé de détection d'un fonctionnement anormal d'un système de roulage à plat.

L'ensemble des essais décrits dans ce qui suit a été réalisé sur un véhicule Renault « Scénic » équipé du système de roulage à plat « PAX » de la Société Michelin comportant un appui de sécurité en caoutchouc.

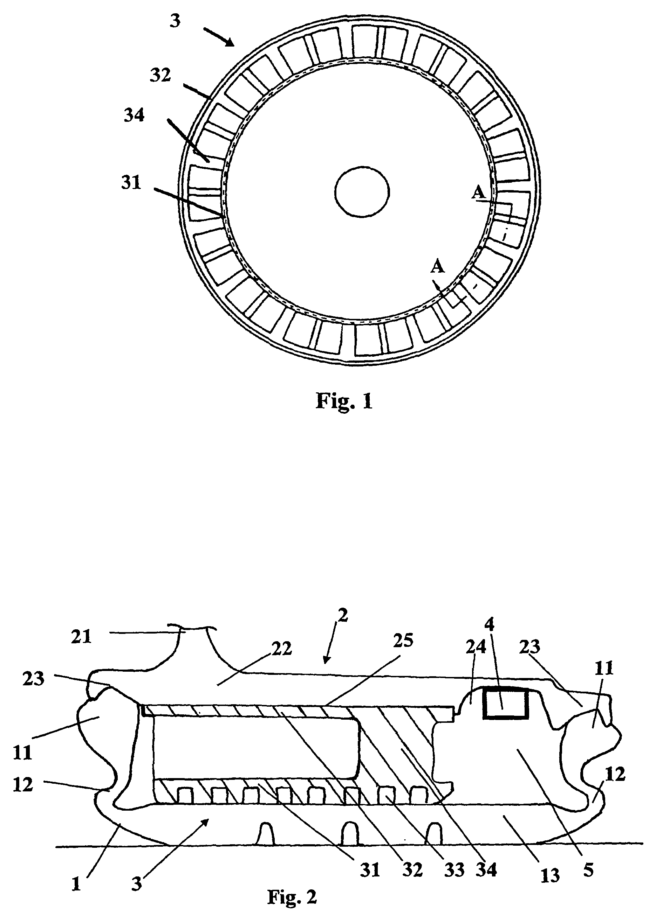

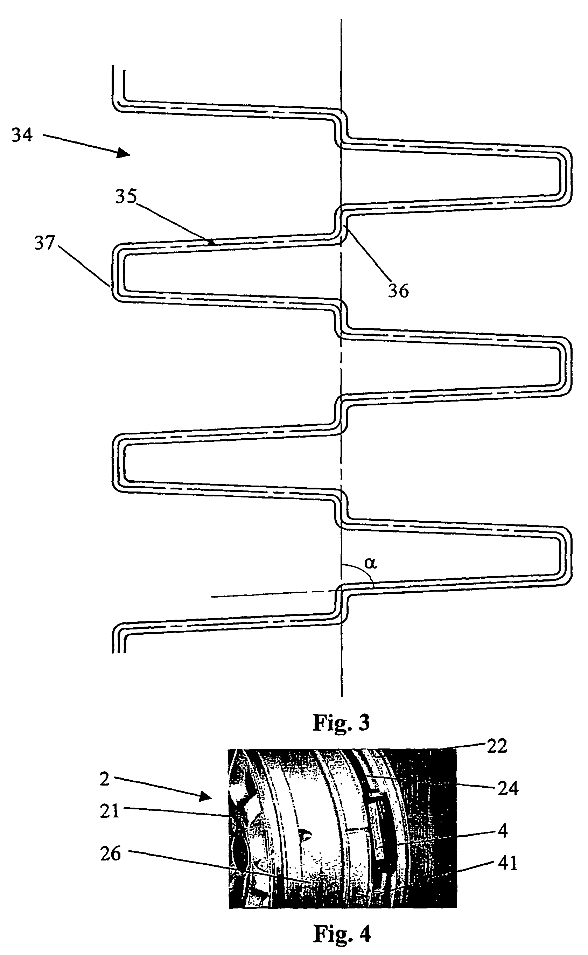

Les figures 1 à 4 illustrent le système de roulage à plat PAX. Ce système comprend un pneumatique 1 (Fig. 2), une roue 2 (figures 2 et 4), un appui de sécurité 3 (figures 1, 2 et 3) et un dispositif avertisseur de dégonflement de la cavité interne définie par le pneumatique et la roue avec pour chaque roue un module de roue 4 disposé dans la cavité interne 5 du pneumatique (Fig. 4).

Le pneumatique 1 comprend deux bourrelets 11, deux flancs 12 et une bande de roulement 13. Ce pneumatique 1 est décrite notamment dans la demande de brevet WO 00/41902. La dimension utilisée dans les essais est 195-620R420 Spacity. Le pneumatique 1 est adaptée pour être montée sur une roue 2 avec un disque 21 (Fig. 4) et une jante 22 (Fig. 2). La jante 22 comprend deux sièges 23, une gorge de montage 24 et une portée de support 25 de l'appui de sécurité. La roue 2 utilisée dans les essais est illustrée à la Fig. 4. La jante de cette roue a une portée de support 25 de l'appui de sécurité 3 avec une gorge circonférentielle d'allégement 26 telle que présentée dans la demande de brevet WO 00/5083. Comme l'illustrent les figures 2 et 4, le module de roue 4 est placé dans la gorge de montage 24 et fixé par une bande rigide 41 entourant cette gorge de montage 24. Le module de roue utilisé est un SmarTire Generation I. Ce module inclut un capteur de pression et un capteur de température. C'est ce module qui a servi dans l'ensemble des essais à mesurer la température interne dans la cavité 5.

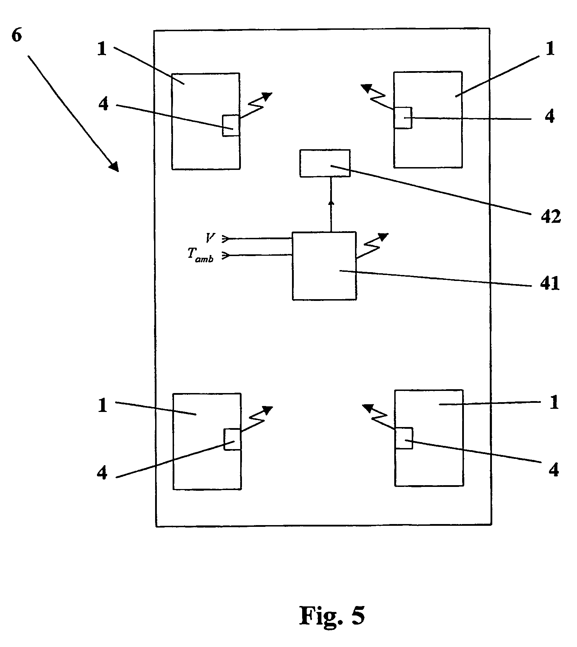

La figure 1 présente une vue de côté de l'appui de sécurité 3 du système PAX. Cet appui comprend essentiellement trois parties. Une base 31, de forme généralement annulaire, un sommet 32, sensiblement annulaire, avec sur sa paroi radialement extérieure (de façon optionnelle) des rainures longitudinales 33 et un corps annulaire 34 de liaison entre la base 31 et le sommet 32. La figure 3 présente un mode particulier de réalisation du corps annulaire 34 tel qu'utilisé dans les essais. La figure 3 est une coupe AA tel que présenté à la figure 1. Le corps annulaire 34 est continu circonférentiellement. Il comprend des cloisons 35 s'étendant de part et d'autre de l'appui avec une partie centrale 36 d'orientation sensiblement circonférentielle. Les cloisons 35 sont inclinées d'un angle $\alpha$ relativement à la direction circonférentielle. Cet angle est proche de 80 degrés. Les cloisons sont ainsi proches d'une orientation axiale. Les cloisons 35 sont reliées entre elles de façon alternée par des liaisons d'orientation circonférentielle 37. Un tel appui de sécurité est décrit dans la demande de brevet WO 00/76791 (mode de réalisation de la figure 5 de cette demande). Les caractéristiques des appuis de sécurité utilisés sont : 115-420(45) ; 115 est la largeur de l'appui, 420 le diamètre nominal du pneumatique et de la jante correspondants et 45 la hauteur de l'appui ; toutes ces cotes sont en millimètres. Ces appuis sont essentiellement réalisés en matériau caoutchouteux.

La figure 2 illustre le fonctionnement du système PAX lors d'un roulage à plat. Lorsque la pression de l'air dans la cavité interne diminue fortement et se rapproche de la pression atmosphérique, la bande de roulement vient en appui contre la paroi radialement extérieure de l'appui de sécurité et c'est cet appui de sécurité qui progressivement va supporter une part croissante de la charge appliquée à la roue. On dit alors que le roulage est un « roulage à plat ». Lorsque la pression dans la cavité interne devient identique à la pression atmosphérique, on dit que « la pression relative » dans la cavité interne est nulle.

Cette figure illustre bien qu'en condition de roulage à plat, on observe un frottement entre la bande de roulement du pneumatique et le sommet de l'appui de sécurité. Ce frottement est susceptible d'entraîner un échauffement important. Pour maîtriser cet échauffement, on inclut usuellement dans la cavité interne du pneumatique un gel de lubrification. Ce gel de lubrification peut être disposé à la surface du sommet de l'appui de sécurité ou dans des réservoirs adaptés tel celui divulgué par la demande WO 01/28789.

La figure 5 présente un schéma d'implantation du dispositif selon l'invention dans un véhicule 6. Le véhicule 6 comprend quatre pneumatiques 1. Le véhicule est équipé d'un avertisseur du dégonflement des pneumatiques 1. Cet avertisseur comporte un module de roue 4 disposé dans chaque ensemble pneumatique/roue du véhicule, une unité centrale 41 disposée dans le châssis du véhicule 6 et un afficheur 42 disposé dans l'habitacle du véhicule. Les modules de roue sont disposés dans les ensemble pneumatique/roue du véhicule de telle sorte d'être en contact avec la cavité interne 5 des pneumatiques (voir figures 2 et 4). Ces modules comportent notamment des capteurs de pression et de température. Les modules de roues 4 et l'unité centrale 41 sont équipés de moyens de transmission de données tels des émetteurs-récepteurs radio et leurs antennes associées. Ces émetteurs-récepteurs radio permettent le transfert des données mesurées par les capteurs de température et de pression inclus dans les modules de roue 4 à l'unité centrale 41. L'unité centrale 41 comporte des moyens de traitement des données reçues, tel un microcalculateur. Ce calculateur est programmé pour identifier l'origine des signaux radio émis par les modules de roues, stocker les valeurs de pression et de température reçues, les traiter, générer des alarmes si nécessaire et les transmettre à l'afficheur 42 pour qu'elles soient portées à la connaissance du conducteur du véhicule. Dans le cas du dispositif selon l'invention, l'unité centrale est aussi connectée à l'odomètre du véhicule ainsi qu'à une sonde de température extérieure disposée sur le châssis du véhicule. Elle reçoit ainsi régulièrement les valeurs de vitesse $V$ du véhicule et de température extérieure $T_n$ au véhicule.

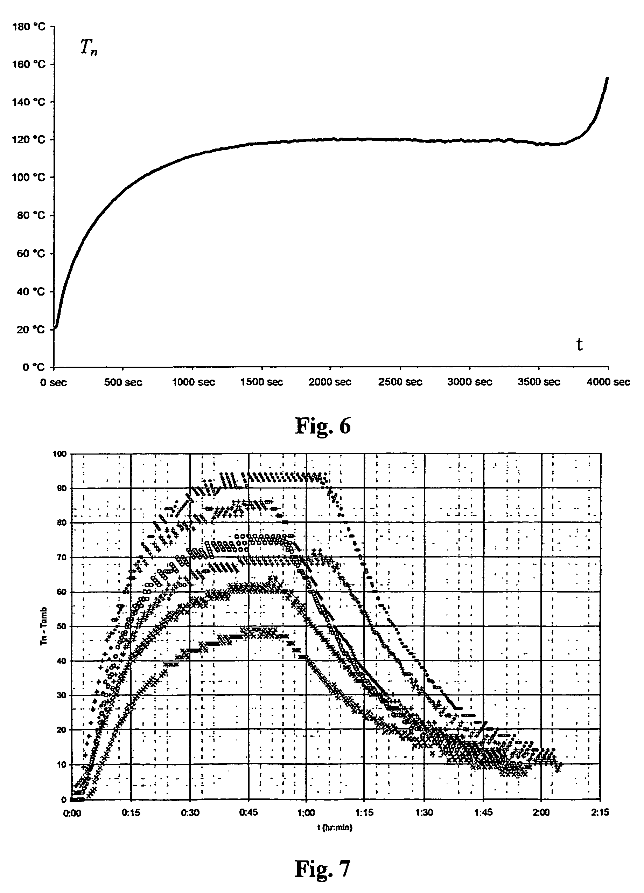

La figure 6 présente une évolution classique de la température de l'air dans la cavité interne du pneumatique ou « température interne » lors d'un essai de roulage à plat sur volant dans des conditions très sévères. Le graphe présente l'évolution de la température $T_n$ en fonction de la durée du test $t$. Après un fort échauffement initial, de l'ordre de 80 degrés Celsius, la température se stabilise. A la fin de l'essai, on constate à nouveau une forte élévation de la température qui témoigne d'un endommagement irréversible de l'appui de sécurité. L'appui n'est alors plus en état de remplir ses fonctions.

Pour pouvoir déterminer empiriquement la température de l'air interne dans la cavité du pneumatique dans des conditions de roulage à plat, on a réalisé une série d'essais analytiques sur volant à vitesses $V$, températures extérieures $T_{amb}$ et charges $Q$ appliquées variables. La figure 7 illustre les résultats obtenus. En abscisse, le graphe présente la durée du test et en ordonnée l'écart mesuré entre la température interne dans la cavité et la température extérieure : $T_n - T_{amb}$.

Les essais ont été réalisés jusqu'à atteindre la température de stabilisation thermique $T_{ss}$ de l'air interne et ensuite ont été arrêtés. On observe donc un fort échauffement comme illustré à la figure 6, puis une phase de température stabilisée suivie par une décroissance. L'ensemble des résultats obtenus à charge appliquée $Q$ maximale peut être modélisé ainsi :

$$T_{SS} = (a + bT_{amb})V^{(c+T_{amb}d)} + T_{amb}$$

avec : $T_{ss}$, température interne à l'équilibre thermique dans les conditions d'essais données, $T_{amb}$, température à l'extérieur du pneumatique, $V$, vitesse de roulage et $a$, $b$, $c$ et $d$ des coefficients d'ajustement.

Pour le système PAX testé, les valeurs des coefficients sont les suivantes :
$a$ = 11.9734 °C.hr/km, $b$ = -0.03152 hr/km, $c$ = 0.4852 et $d \approx 0$.
(hr est l'abréviation d'heure, km de kilomètre, °C de degré Celsius)

On peut aussi estimer la température de l'air interne lors des phases transitoires d'échauffement et de refroidissement à l'aide de l'équation :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$, température interne estimée à l'instant $t_n$ ; $T_{ai,n-1}$, température interne estimée à l'instant $t_{n-1}$ ; $\tau$, coefficient d'ajustement.

Le coefficient $\tau$ caractérise principalement le temps nécessaire pour obtenir l'équilibre thermique et a pour valeur :

$$\tau = 40 \text{ min lorsque } T_{ss} > T_{ai,n}$$

$$\tau = 130 \text{ min lorsque } T_{ss} < T_{ai,n}$$

(min étant l'abréviation de minute)

On constate que l'équilibre thermique est notablement plus long à atteindre lors d'un refroidissement que lors d'un échauffement.

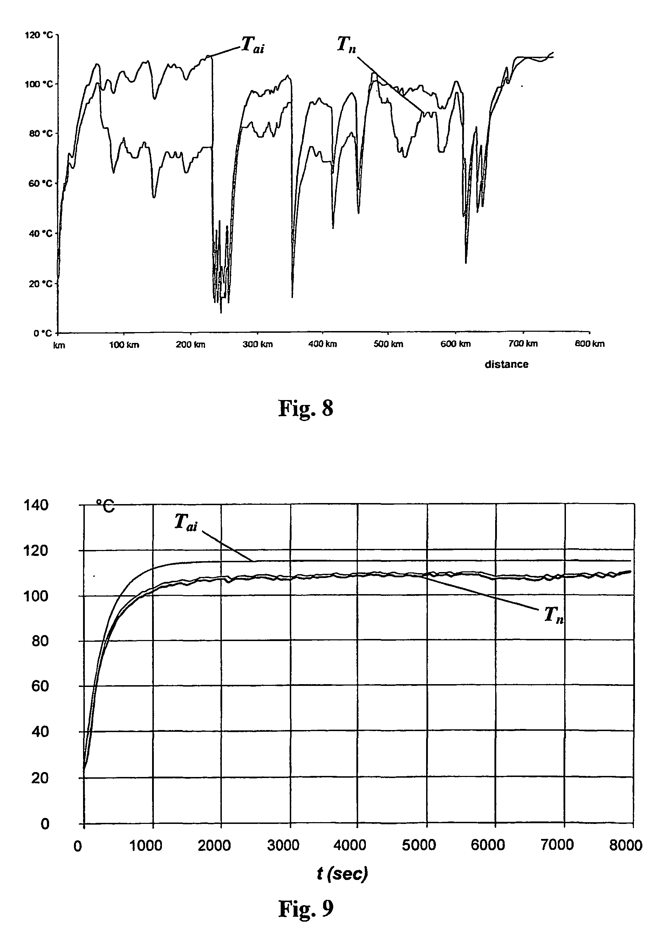

La figure 8 présente les évolutions lors de tests de roulage à plat de longue durée des températures estimées et mesurées. En abscisse, on a la distance parcourue, en ordonnée les températures $T_n$ (mesurée) et $T_{ai,n}$ (estimée). La longueur totale parcourue par le véhicule est de l'ordre de 750 km. On constate que les températures estimées sont pratiquement systématiquement sensiblement supérieures aux températures mesurées. Cela est lié principalement à ce que les essais pris en compte pour établir le modèle empirique sont des essais réalisés à la charge $Q$ maximale pour le pneumatique considéré, alors que les essais de roulage l'ont été à des charges variables. Une autre raison peut aussi être l'imprécision du capteur de mesure de température.

Il est bien entendu possible d'améliorer la précision de l'estimation de la température interne en prenant en compte lors des essais analytiques, mais aussi lors des essais de roulage à plat la charge réelle appliquée au pneumatique.

Le modèle simplifié a cependant une application très importante en terme de sécurité de fonctionnement, il permet de vérifier à chaque instant que le fonctionnement du système de roulage à plat, ici le système PAX, est normal.

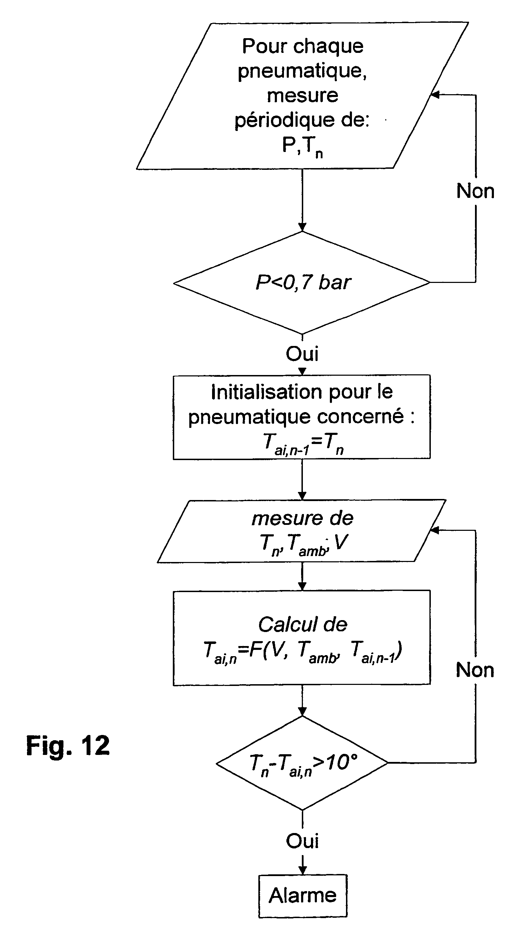

La figure 12 présente un diagramme simplifié du procédé de détection d'un fonctionnement anormal d'un système de roulage à plat. Dès la mise en route du véhicule, l'avertisseur de dégonflement mesure périodiquement pour chaque pneumatique la pression relative et la température de l'air interne de cette cavité. L'unité centrale reçoit, traite les données reçues et déclenche des alarmes appropriées au conducteur. Dès que pour l'un des pneumatiques, la pression relative devient inférieure à un seuil donné, par exemple 0,7 bar, cela veut dire que pour ce pneumatique, la bande de roulement commence à venir en contact avec l'appui de sécurité, on est alors dans des conditions de roulage à plat. L'unité centrale initialise alors le procédé de détection d'un fonctionnement anormal de ce système de roulage à plat Pour cela, elle reçoit périodiquement les valeurs de température interne $T_n$, vitesse du véhicule $V$ et température extérieure $T_{amb}$. Périodiquement, l'unité centrale 41 calcule une estimation de la température interne $T_{ai,n}$ et compare cette estimation à la valeur mesurée $T_n$ :

$$T_n - T_{ai,n}$$

Si le résultat de la comparaison est supérieur à 10 degrés Celsius, l'unité centrale génère une alarme et la transmet à l'afficheur 42 pour qu'elle soit portée à la connaissance du conducteur du véhicule.

Lorsqu'un tel écart est enregistré, il est nécessaire d'avertir le conducteur du véhicule que le système de roulage à plat ne fonctionne plus normalement et qu'il lui faut réduire très sensiblement sa vitesse, voire s'arrêter rapidement.

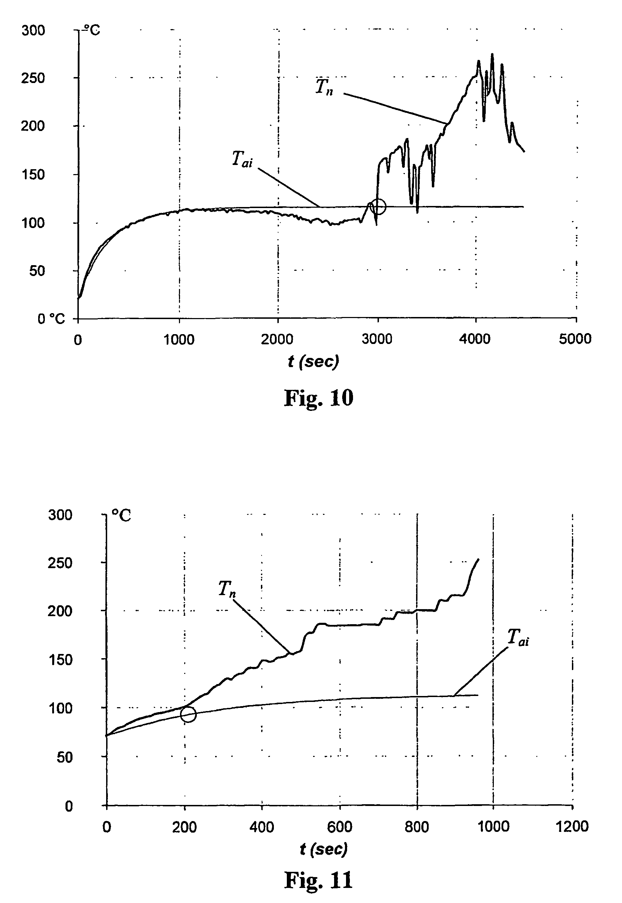

Un exemple concret d'application de ce procédé de détection d'un fonctionnement anormal du système de roulage à plat est maintenant décrit à l'aide des trois figures 9 à 11.

La figure 9 présente l'évolution de la température interne lors d'un roulage dans des conditions de fonctionnement normal d'un système PAX, soit avec notamment 25 grammes de lubrifiant siliconé introduit dans la cavité interne avant l'essai. On constate comme précédemment que la température estimée est sensiblement supérieure à la température mesurée.

La figure 10 présente le résultat d'un essai similaire dans lequel on a réduit la quantité de gel de lubrification à l'intérieur de la cavité à 15 grammes au lieu de 25. Dans ce cas, on constate que, au bout de 3000 secondes, la température mesurée présente un échauffement important et une alarme est très rapidement déclenchée.

La figure 11 est un essai similaire aux deux précédents dans lequel la quantité de gel de lubrification est encore réduite à 7,5 grammes au lieu de 25 et 15. Dans ce cas, on constate que la température mesurée est toujours supérieure à la température estimée et le seuil d'alerte est franchi après 200 secondes de test.

Ces résultats montrent tout l'intérêt du procédé de détection d'un fonctionnement anormal d'un système de roulage à plat selon l'invention. Il est en effet nécessaire, pour des raisons de sécurité d'usage de pouvoir détecter le plus tôt possible un tel fonctionnement anormal. Un tel fonctionnement anormal peut être lié à une surcharge du pneumatique, à un trou de crevaison très important, ce qui pourrait diminuer la quantité de gel de lubrification présente dans la cavité interne de l'enveloppe ou encore à une durée de roulage à plat trop élevée, ne suivant pas les recommandations des manufacturiers du système. Ce procédé de détection est bien entendu limité à la détection des fonctionnements anormaux qui entraînent une augmentation sensible des conditions de frottement entre l'appui de sécurité et la bande de roulement du pneumatique et ainsi une augmentation sensible de la température interne de l'air interne.

**Revendications**

**1.** Procédé de détection d'un fonctionnement anormal d'un système de roulage à plat destiné à équiper un véhicule, ledit système comprenant pour chaque roue un pneumatique formant avec ladite roue une cavité, un moyen de détection de la température interne de ladite cavité, un moyen d'estimation de ladite température interne et des moyens pour générer et transmettre une alarme, dans lequel, en fonctionnement courant :

- on mesure périodiquement la température interne $T_n$ dans ladite cavité ;
- on estime périodiquement ladite température interne $T_{ai}$ ;
- on compare ladite température mesurée et ladite température estimée ; et
- on déclenche une alarme lorsque le résultat de ladite comparaison satisfait une relation donnée.

**2.** Procédé selon la revendication 1, dans lequel on estime ladite température interne en fonction de la vitesse $V$ dudit véhicule et de la température extérieure $T_{amb}$ audit véhicule :

$$T_{ai} = F(V, T_{amb})$$

**3.** Procédé selon la revendication 2, dans lequel, préalablement au fonctionnement courant, on détermine la fonction *F* à partir d'une série d'essais de roulage à plat dudit pneumatique à vitesses *V* et températures extérieures $T_{amb}$ données, ledit pneumatique étant à sa charge maximale et ladite cavité étant substantiellement à pression relative nulle.

**4.** Procédé selon l'une des revendications 2 et 3, dans lequel la température interne $T_{ai}$ est donnée par :

$$T_{ai,n} = T_{SS} - \left(T_{SS} - T_{ai,n-1}\right)\exp\left(\frac{4}{\tau}\left(t_n - t_{n-1}\right)\right)$$

avec : $T_{ai,n}$, température interne estimée à l'instant $t_n$ ; $T_{ai,n-1}$, température interne estimée à l'instant $t_{n-1}$ ; $T_{ss}$, température interne à l'équilibre thermique dans les conditions d'essais données ; $\tau$, coefficient d'ajustement ; et

$$T_{SS} = (a + bT_{amb})V^{(c + T_{amb}d)} + T_{amb}$$

où *a, b, c* et *d* sont des coefficients d'ajustement.

**5.** Procédé selon la revendication 2, dans lequel l'estimation de ladite température interne utilise en complément la charge *Q* dudit pneumatique :

$$T_{ai} = F(V, T_{amb}, Q)$$

**6.** Procédé selon la revendication 5, dans lequel, préalablement au fonctionnement courant, la fonction F est déterminée à partir d'une série d'essais de roulage à plat du pneumatique à vitesses *V*, températures extérieures $T_{amb}$ et charges *Q* données, ladite cavité étant substantiellement à pression relative nulle.

**7.** Procédé selon la revendication 5, dans lequel l'estimation de ladite température interne utilise en complément la pression relative résiduelle *P* dans la cavité de ladite enveloppe :

$$T_{ai} = F(V, T_{amb}, Q, P)$$

**8.** Procédé selon la revendication 7, dans lequel, préalablement au fonctionnement courant, on détermine la fonction *F* à partir d'une série d'essais de roulage à plat du pneumatique à vitesses *V,* températures extérieures $T_{amb}$, charges *Q* et pressions relatives résiduelles *P* données.

**9.** Procédé selon l'une des revendications 1 à 8, dans lequel une alarme est déclenchée lorsque la température mesurée $T_n$ dépasse la température estimée $T_{ai}$ d'un seuil donné.

**10.** Procédé selon la revendication 9, dans lequel ledit seuil est de l'ordre de 10 degrés Celsius.

**11.** Procédé selon l'une des revendications 1 à 10, dans lequel, ledit système comprenant en complément un dispositif avertisseur de dégonflement de ladite cavité du pneumatique, on déclenche le fonctionnement du procédé de détection d'un fonctionnement anormal dudit système à partir du moment où ledit avertisseur de dégonflement a détecté un seuil de dégonflement prédéterminé.

**12.** Procédé selon la revendication 11, dans lequel ledit seuil de dégonflement correspond à une pression relative dans ladite cavité interne de l'ordre de 0,7 bars.

**13.** Procédé selon l'une des revendications 1 à 12, dans lequel le système comprend des moyens de renforcement structurel dudit pneumatique.

**14.** Procédé selon la revendication 13, dans lequel les moyens de renforcement structurel du pneumatique sont un appui de sécurité disposé radialement extérieurement relativement à la jante de ladite roue et destiné à supporter la bande de roulement dudit pneumatique en cas de perte de pression relative de gonflage.

**15.** Procédé selon la revendication 13, dans lequel les moyens de renforcement structurel du pneumatique sont insérés dans la structure dudit pneumatique.

**16.** Dispositif de détection d'un fonctionnement anormal d'un système de roulage à plat destiné à équiper un véhicule, ledit système comprenant pour chaque roue un pneumatique formant avec ladite roue une cavité, comportant :

- un moyen de mesure de la température interne dans ladite cavité,
- un moyen d'estimation de ladite température interne,
- un moyen de comparaison entre la température interne mesurée et la température interne estimée, et
- des moyens pour générer et transmettre une alarme au conducteur,

ledit dispositif étant adapté pour, en fonctionnement courant, générer une alarme lorsque le résultat de ladite comparaison satisfait une relation donnée.

**17.** Dispositif selon la revendication 16, dans lequel le système de roulage à plat comporte en plus un avertisseur de dégonflement de ladite cavité.

**18.** Dispositif selon la revendication 17, dans lequel, ledit avertisseur de dégonflement comportant notamment un module de roue disposé dans la cavité avec au moins un capteur de température et un capteur de pression et des moyens de transmissions des signaux, une unité centrale destinée à être disposée dans le châssis du véhicule avec des moyens de transmission/réception et de traitement des données reçues, et des moyens pour générer et transmettre une alarme au conducteur, le moyen de mesure de la température interne de la cavité est ledit capteur de température.

**19.** Dispositif selon la revendication 18, dans lequel le moyen d'estimation de la température interne est inclus dans ladite unité centrale.

**20.** Procédé de détection d'un fonctionnement anormal d'un pneumatique destiné à équiper un véhicule, ledit pneumatique ayant une cavité interne et étant pourvu d'un moyen de détection de la température interne de ladite cavité, d'un moyen d'estimation de ladite température interne et de moyens pour générer et transmettre une alarme, dans lequel, en fonctionnement courant :

- on mesure périodiquement la température interne $T_n$ dans ladite cavité ;
- on estime périodiquement ladite température interne $T_{ai}$ ;
- on compare ladite température mesurée et ladite température estimée ; et
- on déclenche une alarme lorsque le résultat de ladite comparaison satisfait une relation donnée.

**21.** Procédé selon la revendication 20, dans lequel, en fonctionnement courant, on estime ladite température interne en fonction de la vitesse $V$ dudit véhicule et de la température extérieure $T_{amb}$ audit véhicule :

$$T_{ai} = F(V, T_{amb})$$

**22.** Procédé selon la revendication 21, dans lequel, préalablement au fonctionnement courant, on détermine la fonction $F$ à partir d'une série d'essais de roulage dudit pneumatique à vitesses $V$ et températures extérieures $T_{amb}$ données, ledit pneumatique supportant une charge correspondant à la charge maximale d'usage et ladite cavité étant, à froid, à une pression relative interne correspondant à la pression relative d'usage.

**Patentansprüche**

**1.** Verfahren zum Erfassen von Anomalitäten im Betrieb eines Notlaufsystems für ein Fahrzeug, wobei das System für jedes Rad einen Reifen umfasst, der mit dem Rad einen Hohlraum bildet, eine Einrichtung zur Erfassung der Innentemperatur des Hohlraums, eine Einrichtung zum Abschätzen der Innentemperatur und Einrichtungen zum Erzeugen und Übertragen eines Alarms, bei dem im Betrieb:

wiederholt die Innentemperatur $T_n$ in dem Hohlraum gemessen wird,
wiederholt die Innentemperatur $T_{ai}$ abgeschätzt wird,
die gemessene Temperatur und die abgeschätzte Temperatur verglichen werden und
ein Alarm ausgelöst wird, wenn das Ergebnis des Vergleichs eine bestimmte Beziehung erfüllt.

2. Verfahren nach Anspruch 1, bei dem die Innentemperatur in Abhängigkeit von der Geschwindigkeit V des Fahrzeugs und der Außentemperatur $T_{amb}$ des Fahrzeugs abgeschätzt wird nach:

$$T_{ai} = F(V, T_{amb}).$$

3. Verfahren nach Anspruch 2, bei dem vor dem laufenden Betrieb die Funktion F mit einer Folge von Notlauftests des Reifens bei Geschwindigkeiten V und gegebenen Außentemperaturen $T_{amb}$ bestimmt wird, wobei der Reifen maximal belastet wird und der Hohlraum im Wesentlichen einen Druck null aufweist.

4. Verfahren nach Anspruch 2 oder 3, bei dem die Innentemperatur $T_{ai}$ gegeben ist durch:

$$T_{ai,n} = T_{SS} - (T_{SS} - T_{ai,n-1}) \exp\left(\frac{4}{\tau}(t_n - t_{n-1})\right),$$

wobei $T_{ai,n}$ die Innentemperatur ist, die zum Zeitpunkt $t_n$ abgeschätzt wurde, $T_{ai,n-1}$ die Innentemperatur ist, die zum Zeitpunkt $t_{n-1}$ abgeschätzt wurde, $T_{SS}$ die Innentemperatur im thermischen Gleichgewicht unter den gegebenen Versuchsbedingungen ist, $\tau$ ein Anpassungskoeffizient ist und

$$T_{SS} = (a + bT_{amb})V^{(c + T_{amb}d)} + T_{amb},$$

wobei a, b, c und d Anpassungskoeffizienten sind.

5. Verfahren nach Anspruch 2, bei dem bei der Abschätzung der genannten Innentemperatur zusätzlich die Belastung Q des Reifens berücksichtigt wird:

$$T_{ai} = F(V, T_{amb}, Q).$$

6. Verfahren nach Anspruch 5, bei dem vor dem laufenden Betrieb die Funktion F mit einer Reihe von Notlauftests des Reifens bei Geschwindigkeiten V und Außentemperaturen $T_{amb}$ und gegebenen Belastungen Q bestimmt wird, wobei der Hohlraum im Wesentlichen den relativen Druck null aufweist.

7. Verfahren nach Anspruch 5, bei dem die Abschätzung der Innentemperatur außerdem den relativen Restdruck P in dem Hohlraum des Mantels berücksichtigt:

$$T_{ai} = F(V, T_{amb}, Q, P).$$

8. Verfahren nach Anspruch 7, bei dem vor dem laufenden Betrieb die Funktion F auf Grund einer Folge von Notlauftests des Reifens bei Geschwindigkeiten V, Außentemperaturen $T_{amb}$, Belastungen Q und relativen Restdrücken P bestimmt wird.

9. Verfahren nach einem der Ansprüche 1 bis 8, bei dem ein Alarm ausgelöst wird, wenn die gemessene Temperatur $T_n$ die abgeschätzte Temperatur $T_{ai}$ um einen gegebenen Schwellenwert übersteigt.

10. Verfahren nach Anspruch 9, bei dem der Schwellenwert in der Größenordnung von 10 Grad Celsius liegt.

**11.** Verfahren nach einem der Ansprüche 1 bis 10, bei dem das System außerdem eine Warneinrichtung für den Druckabfall in dem Hohlraum des Reifens umfasst und die Aufnahme des Verfahrens zum Erfassen von Anomalitäten beim Betrieb des Systems ausgelöst wird in dem Moment, in dem die Warneinrichtung für den Druckabfall einen vorgegebenen Schwellenwert für den Druckabfall erkannt hat.

**12.** Verfahren nach Anspruch 11, bei dem der Schwellenwert für den Druckabfall einem relativen Druck in dem Innenraum in der Ordnung von 0,7 Bar entspricht.

**13.** Verfahren nach einem der Ansprüche 1 bis 12, bei dem das System Einrichtungen zur strukturellen Verstärkung des Reifens aufweist.

**14.** Verfahren nach Anspruch 13, bei dem die Einrichtungen zur strukturellen Verstärkung des Reifens eine Sicherheitsstütze umfassen, die in Bezug auf die Felge des Rades radial außerhalb angeordnet ist und dazu dient, die Mantelfläche des Reifens zu stützen, wenn der relative Innendruck abfällt.

**15.** Verfahren nach Anspruch 13, bei dem die Einrichtungen für die strukturelle Verstärkung des Reifens in die Struktur des Reifens eingebaut sind.

**16.** Vorrichtung zum Erfassen von Anomalitäten beim Betrieb eines Notlaufsystems für ein Fahrzeug, wobei das System für jedes Rad einen Reifen umfasst, der mit dem Rad einen Hohlraum bildet, die umfasst:

eine Einrichtung zum Messen der Innentemperatur des Hohlraums,
eine Einrichtung zum Abschätzen der Innentemperatur,
eine Einrichtungen zum Vergleichen der gemessenen Innentemperatur und der abgeschätzten Innentemperatur und Einrichtungen zum Erzeugen und Übertragen eines Alarms an den Fahrer,

wobei die Vorrichtung eingerichtet ist, um im laufenden Betrieb einen Alarm auszulösen, wenn das Ergebnis des Vergleichs eine gegebene Beziehung erfüllt.

**17.** Vorrichtung nach Anspruch 16, bei der das Notlaufsystem außerdem eine Warneinrichtung für den Druckabfall des Hohlraums umfasst.

**18.** Vorrichtung nach Anspruch 17, bei der die Warneinrichtung für den Druckabfall insbesondere ein Radmodul in dem Hohlraum mit einem Temperatursensor und einem Drucksensor und Einrichtungen für die Übertragung von Signalen umfasst, wobei eine Zentraleinheit dazu ausgelegt ist, dass sie in dem Chassis des Fahrzeugs eingebaut werden kann mit Einrichtungen für die Übertragung/den Empfang und für die Verarbeitung von empfangenen Daten sowie mit Einrichtungen, um einen Alarm für den Fahrer zu erzeugen und zu übertragen, wobei die Einrichtung für das Messen der Innentemperatur des Hohlraums der Temperatursensor ist.

**19.** Vorrichtung nach Anspruch 18, bei der die Einrichtung für die Abschätzung der Innentemperatur in der Zentraleinheit eingebaut ist.

**20.** Verfahren zum Erfassen von Anomalitäten im Betrieb eines Reifens für ein Fahrzeug, wobei der Reifen einen Innenraum umfasst und mit einer Einrichtung zum Erfassen der Innentemperatur in dem Hohlraum ausgestattet ist, eine Einrichtung zum Abschätzen der Innentemperatur und Einrichtungen zum Erzeugen und Übertragen eines Alarmsignals, bei dem im laufenden Betrieb:

wiederholt die Innentemperatur $T_n$ in dem Hohlraum gemessen wird,
wiederholt die Innentemperatur $T_{ai}$ abgeschätzt wird,
die gemessene Temperatur und die abgeschätzte Temperatur verglichen werden und
ein Alarm ausgelöst wird, wenn das Ergebnis des Vergleichs eine vorgegebene Beziehung erfüllt.

**21.** Verfahren nach Anspruch 20, bei dem im laufenden Betrieb die Innentemperatur in Abhängigkeit von der Geschwindigkeit V des Fahrzeugs und der Außentemperatur $T_{amb}$ des Fahrzeugs abgeschätzt wird nach:

$$T_{ai} = F(V, T_{amb}).$$

**22.** Verfahren nach Anspruch 21, bei dem vor dem laufenden Betrieb die Funktion F auf Grund einer Reihe von Notlauftests des Reifens bei Geschwindigkeiten V und Außentemperaturen $T_{amb}$ bestimmt wird, wobei der Reifen eine Last stützt, die der maximalen Last bei Benutzung entspricht, und der Hohlraum im kalten Zustand einen relativen Innendruck aufweist, der dem relativen Druck bei Benutzung entspricht.

**Claims**

**1.** Method of detecting abnormal functioning of a running-flat system intended to equip a vehicle, the said system having, for each wheel, a tyre forming a cavity with said wheel, a means of detecting the internal temperature of the said cavity, a means of estimating the said internal temperature and means for generating and transmitting an alarm, in which, in normal functioning:

- the internal temperature $T_n$ in the said cavity is measured periodically;
- the said internal temperature $T_{ai}$ is estimated periodically;
- the said measured temperature and the said estimated temperature are compared; and
- an alarm is triggered when the result of the said comparison satisfies a given relationship.

**2.** Method according to Claim 1, in which the said internal temperature is estimated according to the speed $V$ of the said vehicle and the temperature $T_{amb}$ external to the said vehicle:

$$T_{ai} = F(V, T_{amb})$$

**3.** Method according to Claim 2, in which, prior to normal functioning, the function $F$ is determined from a series of running-flat tests on the said tyre at given speeds $V$ and external temperatures $T_{amb}$, the said tyre being at its maximum load and the said cavity being substantially at zero relative pressure.

**4.** Method according to one of Claims 2 and 3, in which the internal temperature $T_{ai}$ is given by:

$$T_{ai,n} = T_{SS} - \left(T_{SS} - T_{ai,n-1}\right)\exp\left(\frac{4}{\tau}\left(t_n - t_{n-1}\right)\right)$$

with: $T_{ai,n}$, internal temperature estimated at time $t_n$; $T_{ai,n-1}$, internal temperature estimated at time $t_{n-1}$; $T_{ss}$, internal temperature at thermal equilibrium under the given test conditions; r, adjustment coefficient; and

$$T_{SS} = (a + bT_{amb})V^{(c+T_{amb}d)} + T_{amb}$$

where *a, b, c* and *d* are adjustment coefficients.

**5.** Method according to Claim 2, in which the estimation of the said internal temperature uses in addition the load $Q$ on the said tyre:

$$T_{ai} = F(V, T_{amb}, Q)$$

**6.** Method according to Claim 5, in which, prior to normal functioning, the function $F$ is determined from a series of running-flat tests on the tyre at given speeds $V$, external temperatures $T_{amb}$ and loads $Q$, the said cavity being substantially at zero relative pressure.

**7.** Method according to Claim 5, in which the estimation of the said internal temperature uses in addition the residual relative pressure $P$ in the cavity in the said cover:

$$T_{ai} = F(V, T_{amb}, Q, P)$$

**8.** Method according to Claim 7, in which, prior to normal functioning, the function $F$ is determined from a series of running-flat tests on the tyre at given speeds $V$, external temperatures $T_{amb}$, loads $Q$ and residual relative pressures $P$.

**9.** Method according to one of Claims 1 to 8, in which an alarm is triggered when the measured temperature $T_n$ exceeds the estimated temperature $T_{ai}$ by a given threshold.

**10.** Method according to Claim 9, in which the said threshold is around 10 degrees Celsius.

**11.** Method according to one of Claims 1 to 10, in which, the said system comprising in addition a device warning of the deflation of the said cavity of the tyre, the functioning of the method of detecting abnormal functioning of the said system is triggered as from the moment when the said deflation warning device has detected a predetermined deflation threshold.

**12.** Method according to Claim 11, in which the said deflation threshold corresponds to a relative pressure in the said internal cavity of around 0.7 bar.

**13.** Method according to one of Claims 1 to 12, in which the system comprises means of structural reinforcement of the said tyre.

**14.** Method according to Claim 13, in which the means of structural reinforcement of the tyre are a safety support disposed radially externally relative to the rim of the said wheel and intended to support the tread of the said tyre in the event of a relative loss of inflation pressure.

**15.** Method according to Claim 13, in which the means of structural reinforcement of the tyre are inserted in the structure of the said tyre.

**16.** Device for detecting abnormal functioning of a running-flat system intended to equip a vehicle, the said system comprising, for each wheel, a tyre forming a cavity with the said wheel, comprising:

- a means of measuring the internal temperature in the said cavity,
- a means of estimating the said internal temperature,
- a means of comparison between the measured internal temperature and the estimated internal temperature, and
- means for generating and transmitting an alarm to the driver,

the said device being adapted for generating an alarm in normal operation when the result of the said comparison satisfies a given relationship.

**17.** Device according to Claim 16, in which the running-flat system also comprises a warning device for the deflation of the said cavity.

**18.** Device according to Claim 17, in which, the said deflation warning device comprising in particular a wheel module disposed in the cavity with at least one temperature sensor and one pressure sensor and signal transmission means, a central unit intended to be disposed in the vehicle chassis with means of transmitting/receiving and processing the data received, and means for generating and transmitting an alarm to the driver, the means of measuring the internal temperature of the cavity is the said temperature sensor.

**19.** Device according to Claim 18, in which the means of estimating the internal temperature is included in the said central unit.

**20.** Method of detecting abnormal functioning of a tyre intended to equip a vehicle, the said tyre having an internal cavity and being provided with a means of detecting the internal temperature of the said cavity, a means of estimating the said internal temperature and means for generating and transmitting an alarm, in which, in normal functioning:

- the internal temperature $T_n$ in the said cavity is measured periodically;
- the said internal temperature $T_{ai}$ is estimated periodically;
- the said measured temperature and the said estimated temperature are compared; and
- an alarm is triggered when the result of the said comparison satisfies a given relationship.

21. Method according to Claim 20, in which, in normal functioning, the said internal temperature is estimated according to the speed V of the said vehicle and the temperature $T_{amb}$ external to the said vehicle:

$$T_{ai} = F(V, T_{amb})$$

22. Method according to Claim 21, in which, prior to the normal functioning, the function $F$ is determined from a series of running tests on the said tyre at given speeds $V$ and external temperatures $T_{amb}$, the said tyre supporting a load corresponding to the normal maximum load and the said cavity being, when cold, at an internal relative pressure corresponding to the normal relative pressure.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

**Fig. 11**

**Fig. 12**

Pour chaque pneumatique, mesure périodique de: $P, T_n$

Non

$P < 0{,}7\ bar$

Oui

Initialisation pour le pneumatique concerné : $T_{ai,n-1} = T_n$

mesure de $T_n, T_{amb}, V$

Calcul de $T_{ai,n} = F(V, T_{amb}, T_{ai,n-1})$

Non

$T_n - T_{ai,n} > 10°$

Oui

Alarme